Europäisches Patentamt

European Patent Office

Office européen des brevets

(19)

(11) **EP 1 427 157 B1**

(12) **FASCICULE DE BREVET EUROPEEN**

(45) Date de publication et mention
de la délivrance du brevet:
**08.02.2006 Bulletin 2006/06**

(51) Int Cl.:
*H04L 25/02* (2006.01)      *H04L 7/04* (2006.01)
*H04J 3/06* (2006.01)

(21) Numéro de dépôt: **03292885.5**

(22) Date de dépôt: **20.11.2003**

(54) **Procédé de detection d'une rafale à partir d'une estimation de canal et système recepteur pour la mise en oeuvre du procédé**

Verfahren und Empfängersystem für Burst-Detektion mittels Kanalschätzung

Method and receiver system for burst detection using channel estimation

(84) Etats contractants désignés:
**DE FR GB**

(30) Priorité:  **04.12.2002  FR 0215272**

(43) Date de publication de la demande:
**09.06.2004  Bulletin 2004/24**

(73) Titulaire: **Nortel Networks Limited
St.Laurent, Quebec H4S 2A9 (CA)**

(72) Inventeurs:
 • **Ben Rached, Nidham
   75017 Paris (FR)**
 • **Lucidarme, Thierry
   78180 Montigny-le-Bretonneux (FR)**

(74) Mandataire: **Loisel, Bertrand
   Cabinet Plasseraud
   65/67 rue de la Victoire
   75440 Paris Cedex 09 (FR)**

(56) Documents cités:
   **EP-A- 0 923 207          US-A- 6 144 709
   US-B1- 6 487 187**

 • **IN-KYUNG KIM ET AL: "Comparisons of CFAR
   burst detection schemes for TDMA systems
   employing constant modulus modulation format"**
   MILITARY COMMUNICATIONS CONFERENCE,
   1998. MILCOM 98. PROCEEDINGS., IEEE
   BOSTON, MA, USA 18-21 OCT. 1998, NEW YORK,
   NY, USA,IEEE, US, 18 octobre 1998 (1998-10-18),
   pages 360-364, XP010307792 ISBN:
   0-7803-4506-1

**Description**

La présente invention concerne la détection, par un récepteur, de rafales de signal transmises sur un canal radio dans un système de communication.

Elle trouve une application notamment dans la détection de rafales courtes émise dans un réseau de radiocommunication. Ces rafales peuvent être de différents types, comme des rafales de synchronisation initiale ou des rafales d'accès aléatoire au réseau mobile. Ce dernier cas sera plus particulièrement développé par la suite, sans que cela soit limitatif.

Lorsqu'un terminal mobile d'un réseau de communication souhaite disposer de ressources de communication, par exemple pour effectuer un appel, il exécute une requête au réseau qui gère et distribue les ressources. Cette requête d'accès aléatoire consiste généralement en la transmission d'un message dont le préambule est une rafale de signal représentant une séquence numérique prédéterminée. Ce message est émis sur un canal radio montant écouté par un système de réception du réseau. Dans les systèmes de radiocommunication tels que le GSM (« Global System for Mobile communications») et l'UMTS (« Universal Mobile Telecommunication System »), ce canal est appelé RACH ou PRACH (« Packet Random Access CHannel »). Le format d'un tel message est notamment décrit à la section 5.2.2.2 de la spécification technique TS 25.211 version 5.2.0 Release 5, « Physical channels and mapping of transport channels onto physical channels (FDD) », publiée en septembre 2002 par l'organisation 3GPP.

Une détection fiable des rafales d'accès aléatoire sur le RACH est importante car le taux d'échec d'établissement de communications vu d'un utilisateur radiomobile en dépend directement.

Une amélioration de la fiabilité de détection est particulièrement intéressante pour des systèmes de réception qui comprennent des antennes intelligentes (« smart antennas ») sectorielles ou omnidirectionnelles.

Dans le système UMTS, la séquence numérique prédéterminée émise sur le canal RACH par un terminal mobile a une taille de 4096 "chips", un chip étant un élément de code conformément au codage utilisé dans le système. Les données échangées sont constituées en trames de 10 ms, elles-mêmes subdivisées en 15 intervalles de temps (ou "slots") de 666 µs, correspondant à 2560 chips. Ainsi, la rafale de signal associée à la séquence numérique émis sur le RACH est reçu à l'intérieur d'un intervalle correspondant à deux slots consécutifs.

Lorsque le réseau radio souhaite déterminer si une rafale d'accès aléatoire a été transmise sur un canal RACH, il calcule pour les 1024 (= $2 \times 2560 - 4096$) positions possibles de la séquence numérique de la rafale à l'intérieur de deux slots consécutifs, une corrélation entre la séquence telle que détectée et la séquence numérique prédéterminée qui est connue du réseau.

Un critère doit être défini pour décider, à partir d'une telle corrélation, si la séquence numérique prédéterminée est présente. Celui-ci est habituellement basé sur le niveau énergétique de la corrélation, qui est comparé à un niveau seuil prédéfini.

Cependant, selon les conditions de propagation du canal radio utilisé, le signal reçu par le réseau radio est plus ou moins atténué. Il en résulte que la fixation du seuil est délicate: un seuil trop bas cause de nombreuses fausses détections qui perturbent le système, tandis qu'un seuil trop élevé fait manquer des requêtes d'accès provenant de terminaux relativement éloignés de la station de base.

Une rampe de puissance peut être utilisée par le terminal mobile pour retransmettre régulièrement la rafale d'accès au réseau sur le canal RACH avec, pour chaque nouvelle transmission une puissance d'émission augmentée, tant que le réseau n'a pas répondu à sa demande de ressources. Cette méthode permet d'améliorer la détection de la rafale par le réseau radio, notamment dans le cas où la faible puissance d'émission des premières transmissions est à l'origine de l'absence de détection de la rafale sur le RACH.

Toutefois, par la répétition de la rafale d'accès aléatoire sur le RACH, cette méthode occupe le canal au détriment des requêtes éventuelles des autres utilisateurs. En outre, la puissance élevée des signaux ainsi répétés peut créer des interférences nuisibles dans le système.

Le document "Comparisons of CFAR burst detection schemes for TDMA systems employing constant modulus modulation format" de In-Kyung Kim et Wonjin Sung, Military Communications Conf., IEEE, 18.10.1998, pages 360-364, compare les performances de deux méthodes de détection de signal contenant une séquence numérique prédéterminée, respectivement nommées SWRD (Single Window Ratio Detection) et DWRD (Double Window Ratio Detection). Selon ces méthodes, une grandeur de détection est évaluée à partir d'une corrélation entre un signal reçu à un système récepteur et la séquence numérique prédéterminée, avant d'être comparée à un seuil fixe $\alpha$.

Un but de la présente invention est de proposer une méthode de détection de signaux prédéfinis qui permet d'atténuer les inconvénients des méthodes connues.

L'invention propose ainsi un procédé de détection d'une rafale de signal conformément à la revendication 1.

La fiabilité de la détection est ainsi augmentée grâce à une prise en compte a posteriori des effets de cette détection. Une rétroaction permet alors une adaptation pertinente du seuil de détection employé.

L'invention propose également un système récepteur adapté à la mise en oeuvre du procédé ci-dessus.

D'autres particularités et avantages de la présente invention apparaîtront dans la description ci-après d'exemples de réalisation non limitatifs, en référence aux dessins annexés, dans lesquels :

- la figure 1 est un schéma d'un système mettant en oeuvre l'invention;
- la figure 2 est un diagramme schématisant les principaux échanges de signalisation en vue d'une allocation de ressources à un terminal mobile dans un système de type GSM; et
- la figure 3 est un organigramme schématisant certaines étapes du procédé selon l'invention.

On se place ci-après dans le cas non limitatif d'une réalisation de l'invention appliquée à la détection d'une rafale de signal d'accès aléatoire à un réseau radio cellulaire.

Le terminal mobile 1 émet une rafale de signal sur un canal de type RACH lorsqu'il souhaite accéder au réseau et obtenir de ce dernier des ressources de communication.

Le réseau est composé principalement d'un réseau coeur assurant la commutation des données et le raccordement à d'autres réseaux de communication, comme le RTCP (« Réseau Téléphonique Commuté Public »), et d'un réseau radio responsable des échanges de données et de signalisation avec des terminaux mobiles.

Le réseau radio comprend généralement des systèmes d'émission et de réception, appartenant à des stations de base, ainsi que des contrôleurs de stations de base assurant des fonctions de plus haut niveau que la simple transmission des données, comme la gestion des ressources radio ou de la mobilité par exemple. Certaines fonctions peuvent être exécutées indifféremment par les stations de base ou par les contrôleurs de stations de base. Certaines peuvent également être effectuées de façon partagée par ces entités.

On considère une station de base incluant un système de réception 2 capable de recevoir des signaux émis notamment par le terminal 1. De façon avantageuse mais non restrictive, certaines des fonctions effectuées par le système de réception 2, qui seront détaillées par la suite, sont sous la responsabilité du contrôleur dont dépend cette station de base. Ce contrôleur 3 est appelé BSC (« Base Station Controller ») dans la terminologie utilisée dans le système GSM. Dans le système UMTS, la station de base est parfois nommée « Node B » et le contrôleur de station de base est appelé RNC (« Radio Network Controller »).

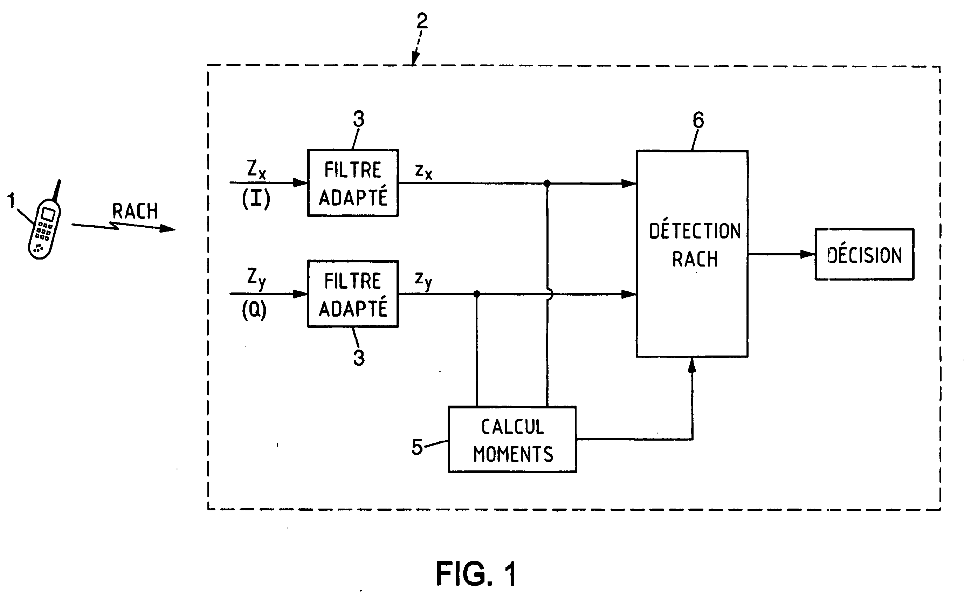

Le système de réception 2 illustré sur la figure 1 comporte deux voies principales de réception, en phase (I) et en quadrature (Q). Le signal radio reçu est mélangé à deux ondes radio en quadrature à la fréquence porteuse. Après filtrage passe-bas, les deux composantes qui en résultent forment respectivement un signal en phase $Z_x$ et un signal en quadrature $Z_y$ qui, ensemble, peuvent être vus comme constituant un signal complexe $Z = Z_x + j.Z_y$.

Le signal Z comporte à la fois les signaux éventuellement émis par le terminal mobile 1 et les signaux résiduels constitués de bruit et d'interférences. Etant donné que les fréquences porteuses sont généralement partagées par plusieurs utilisateurs, les signaux transmis par d'autres terminaux mobiles constituent des interférences, semblables au bruit dans un système CDMA tel que l'UMTS. A chaque instant le système 2 reçoit donc des signaux $Z_x$, $Z_y$ constitués de séquences numériques sur chacune des deux voies I et Q.

La séquence numérique prédéterminée représentée par la rafale d'accès aléatoire est une séquence s de M échantillons (chips dans un système CDMA) ayant une longueur suffisante pour assurer une détection dans de bonnes conditions. Dans le cas de l'UMTS, elle est de M = 4096 chips, soit un peu plus d'une milliseconde (la cadence des chips est de 3,84 Mchip/s). Pour détecter la présence éventuelle d'une telle rafale, le système récepteur comporte deux filtres 3, respectivement sur les voies I et Q, qui sont adaptés à la séquence prédéterminée de chips, et qui réalisent l'opération z = Z.s*, où (.)* désigne le complexe conjugué. Le signal complexe $z = z_x + j.z_y$ produit par ces filtres 3 représente ainsi une corrélation entre le signal reçu et la séquence à détecter, calculée à la fréquence des chips. Les deux signaux réels $z_x$ et $z_y$, correspondent respectivement aux composantes réelle et imaginaire du signal détecté après filtrage adapté.

Ayant détecté le signal complexe $z = z_x + j z_y$, le système récepteur 2 effectue un calcul pour déterminer la vraisemblance selon laquelle ce signal z révèle la présence la séquence numérique connue émise sur le RACH par le terminal mobile 1.

Soient H1 l'hypothèse selon laquelle la rafale d'accès aléatoire a été émise sur le canal RACH et H0 l'hypothèse complémentaire selon laquelle seul du bruit est présent. On peut écrire le rapport des probabilités basées sur la connaissance du signal détecté z comme suit, selon la formule de Bayes :

$$P(H1/z) \,/\, P(H0/z) = \big(P(z/H1)\,/\,P(z/H0)\big) \times \big(P(H1)\,/\,P(H0)\big) \qquad (1)$$

où P(a/b) désigne la probabilité de a connaissant b.

Le système récepteur 2 considère que la rafale a été émise sur le RACH si ce rapport P(H1/z) / P(H0/z) est supérieur à un certain seuil c. En outre, le rapport $\frac{P(H1)}{P(H0)} = \frac{P(H1)}{1-P(H1)}$ est indépendant du signal détecté. On peut considérer que le rapport P(H1/z) / P(H0/z) est supérieur au seuil de détection c, si le rapport P(z/H1) / P(z/H0) est supérieur à un seuil c', tel que c' = c × P(H0) / P(H1).

Le système récepteur 2 évalue donc le rapport de probabilités P(z/H1) / P(z/H0) pour décider, par comparaison à un seuil, de la détection ou non d'une rafale d'accès aléatoire sur le canal RACH. Cette évaluation prend avantageusement en compte les conditions de propagation sur ce canal.

Le signal détecté par le système récepteur 2 à la suite de l'émission d'une rafale peut s'écrire sous la forme Z = a.s + n, où a désigne l'atténuation ou gain du canal de propagation et n désigne le bruit blanc gaussien capté par le système 2.

En sortie des filtres 3 adaptés à la séquence s, le signal s'écrit alors z = a.|s|$^2$ + n', où n' = n.s* a également les propriétés d'un bruit gaussien. Sans affecter la généralité, on peut considérer les séquences s comme normées, soit |s|$^2$ = 1.

La probabilité de détecter le signal z après filtrage adapté sachant que la séquence prédéfinie a été émise sur le RACH peut alors s'écrire : $P(z/H1) = \dfrac{1}{\sqrt{\pi N_0}} \cdot \displaystyle\int_C e^{-\frac{1}{N_0}|z-a|^2} \cdot p(a).da$ , avec C l'ensemble des réalisations possibles du gain complexe a sur le canal de propagation, $N_0$ la puissance du bruit et p(a) la densité de probabilité du gain a. De même, la probabilité de détecter le signal z après filtrage adapté sachant que seul du bruit a été reçu peut s'écrire : $P(z/H0) = \dfrac{1}{\sqrt{\pi N_0}} \cdot e^{-\frac{1}{N_0}|z|^2}$ . On en déduit la relation :

$$\frac{P(z/H1)}{P(z/H0)} = \int_C e^{-\frac{1}{N_0}\cdot(|a|^2 - 2.\Re e(za^*))} \cdot p(a).da \qquad (2)$$

Si on développe le signal z selon ses deux composantes pour chacune des deux voies, on a z = $z_x$ + j $z_y$. De même, on peut écrire le gain du canal de propagation a sous la forme : a = $a_x$ + j $a_y$. L'indépendance des deux variables aléatoires $a_x$ et $a_y$ permet de factoriser la densité de probabilité p(a) sous la forme : $p_x(a_x).p_y(a_y)$ et d'écrire:

$$\frac{P(z/H1)}{P(z/H0)} = \int_C e^{-\frac{1}{N_0}\cdot(a_x^2 + a_y^2 - 2(z_x a_x + z_y a_y))} \cdot p_x(a_x) p_y(a_y).da_x da_y$$

$$= \left( \int_R e^{-\frac{1}{N_0}\cdot(a_x^2 - 2z_x a_x)} \cdot p_x(a_x).da_x \right)\left( \int_R e^{-\frac{1}{N_0}\cdot(a_y^2 - 2z_y a_y)} \cdot p_y(a_y).da_y \right) \quad (3)$$

où R désigne l'ensemble des nombres réels.

Par ailleurs, les polynômes de Hermite sont des polynômes d'ordre n, n étant un entier naturel, qui satisfont l'équation différentielle suivante : -H$_n$"(x) + 2x.H$_n$'(x) = 2n.H$_n$(x). Les premiers polynômes de Hermite, pour des ordres allant de 0 à 5 sont les suivants :

$$H_0(x) = 1 ; \qquad H_1(x) = 2x ;$$
$$H_2(x) = 4x^2-2 ; \qquad H_3(x) = 8x^3-12x ;$$
$$H_4(x) = 16x^4-48x^2+12 ; \quad H_5(x) = 32x^5-160x^3+120x .$$

Ces polynômes satisfont l'équation: $e^{2uv-u^2} = \sum_{n=0}^{\infty} H_n(v).\frac{u^n}{n!}$, de sorte qu'on peut écrire:

$$\int_R e^{-\frac{1}{N_0}.(a_x^2-2z_xa_x)}.p_x(a_x).da_x = \int_R \left(\sum_{n=0}^{\infty} \frac{1}{n!}.H_n\left(\frac{z_x}{\sqrt{N_0}}\right)\left(\frac{a_x}{\sqrt{N_0}}\right)^n\right).p_x(a_x).da_x$$

$$= \sum_{n=0}^{\infty} \frac{1}{n!\left(\sqrt{N_0}\right)^n}.H_n\left(\frac{z_x}{\sqrt{N_0}}\right).ma_{x,n}$$

avec $ma_{x,n} = \int_R a_x^n.p_x(a_x).da_x$ représentant le moment d'ordre n de la distribution de la composante en phase du     gain     du     canal     de     propagation.     De     même :

$$\int_R e^{-\frac{1}{N_0}.(a_y^2-2z_ya_y)}.p_y(a_y).da_y = \sum_{n=0}^{\infty} \frac{1}{n!\left(\sqrt{N_0}\right)^n}.H_n\left(\frac{z_y}{\sqrt{N_0}}\right).ma_{y,n} , \qquad \text{avec}$$

$ma_{y,n} = \int_R a_y^n.p_y(a_y).da_y$ représentant le moment d'ordre n de la distribution de la composante en quadrature du gain du canal de propagation.

Par conséquent, le rapport de probabilités P(z/H1)/P(z/H0) peut s'écrire :

$$\frac{P(z/H1)}{P(z/H0)} = \left(\sum_{n=0}^{\infty} \frac{1}{n!\left(\sqrt{N_0}\right)^n}.H_n\left(\frac{z_x}{\sqrt{N_0}}\right).ma_{x,n}\right)\left(\sum_{n=0}^{\infty} \frac{1}{n!\left(\sqrt{N_0}\right)^n}.H_n\left(\frac{z_y}{\sqrt{N_0}}\right).ma_{y,n}\right) \quad (4)$$

Selon l'invention, un module de calcul 5 du système récepteur 2 estime les moments $ma_{x,n}$ et $ma_{y,n}$ en sortie des filtres adaptés 3 pour chacune des deux voies de réception respectivement.

Cette évaluation est effectuée sur un intervalle de temps dit intervalle d'évaluation qui correspond à un nombre de chips inférieur au nombre de positionnements possibles de la rafale d'accès aléatoire à l'intérieur de deux slots consécutifs. Si l'on reprend le cas de l'UMTS, où il existe 1024 positions possibles de la rafale à l'intérieur de 2 slots consécutifs, on peut choisir par exemple un intervalle d'évaluation correspondant à 32 chips.

L'évaluation des moments consiste alors à estimer la probabilité $p_x(a_x)$, $p_y(a_y)$ de trouver chaque valeur d'une composante caractéristique du gain du canal de propagation $a_{x,n}$ et $a_{y,n}$, dans l'échantillon correspondant du signal détecté dans l'intervalle d'évaluation. Ces probabilités sont ensuite pondérées par la puissance n[ième] de la valeur de composante     associée,     avant     d'être     sommées,     comme     cela     est     indiqué     par     les     formules

$$ma_{x,n} = \int_R a_x^n \cdot p_x(a_x) \cdot da_x \quad \text{et} \quad ma_{y,n} = \int_R a_y^n \cdot p_y(a_y) \cdot da_y \quad \text{respectivement.}$$

Après chaque nouvelle évaluation, le module 5 de calcul des moments envoie le résultat de son calcul à un module 6 de détection du RACH du système récepteur 2. Ce module calcule le rapport de probabilités P(z/H1) / P(z/H0) grâce à la formule (4), en tronquant la sommation à un ordre k < ∞:

$$\frac{P(z/H1)}{P(z/H0)} = \left( \sum_{n=0}^{k} \frac{1}{n! \left(\sqrt{N_0}\right)^n} \cdot H_n\left(\frac{z_x}{\sqrt{N_0}}\right) ma_{x,n} \right) \left( \sum_{n=0}^{k} \frac{1}{n! \left(\sqrt{N_0}\right)^n} \cdot H_n\left(\frac{z_y}{\sqrt{N_0}}\right) ma_{y,n} \right).$$

Ce calcul est aisé puisque les moments $ma_{x,n}$ et $ma_{y,n}$ ont été fournis par le module 5. La variance $N_0$ du bruit est classiquement disponible dans le récepteur, à partir d'une moyenne de l'énergie du signal complexe en sortie des filtres adaptés 3.

Il est particulièrement avantageux que le nombre k soit supérieur à 2, pour prendre en compte des moments d'ordre élevé qui traduisent finement le comportement du canal.

Il pourrait aussi être limité à 2, auquel cas le calcul du rapport P(z/H1) / P(z/H0) peut se ramener à celui de l'énergie du signal de sortie z des filtres adaptés 3.

Le module de détection 6 peut mémoriser des tables donnant pour certaines valeurs types, la valeur correspondante pour les polynômes de Hermite. Ceci permet de déterminer facilement la valeur du rapport P(z/H1) / P(z/H0) pour toute nouvelle valeur détectée de $z_x$ et $z_y$ à l'intérieur de l'intervalle d'évaluation des moments.

Le rapport de probabilités ainsi estimé est alors comparé par le module de détection 6 à un seuil de détection c' par exemple fixé selon un objectif de fiabilité de détection des RACH. Si le rapport P(z/H1) / P(z/H0) est supérieur à c' (ce qui correspond au fait que le rapport P(H1/z) / P(H0/z) dépasse lui-même un certain seuil comme cela a été vu plus haut), le système récepteur 2 considère alors que la séquence prédéfinie a été émise sur le canal RACH. Des ressources vont pouvoir ainsi être mise à disposition du terminal demandeur.

Dans le cas contraire, où le rapport P(z/H1) / P(z/H0) est inférieur à c', le système de réception 2 peut décider de conclure qu'aucune séquence n'a été émise sur le canal RACH.

Bien sûr, dans le cas où la décision du système récepteur 2 est erronée, par exemple s'il ignore une requête émise par le terminal 1 sur le RACH, le terminal, qui ne reçoit pas la réponse attendue, peut appliquer une méthode de répétition pour améliorer la fiabilité de la détection par le système récepteur 2, par exemple en mettant en oeuvre une rampe de puissance.

Quelle que soit la grandeur de détection calculée en fonction du signal instantané reçu, l'invention prévoit une adaptation du seuil de détection auquel est comparée cette grandeur. L'adaptation prend en compte l'un au moins des deux éléments suivants:

- objectif d'un certain taux de fausses détections de la rafale, lequel taux peut varier avec l'environnement radio si on garde la même valeur de seuil;

- le rapport de probabilités $\dfrac{P(H1)}{P(H0)} = \dfrac{P(H1)}{1 - P(H1)}$ intervenant dans l'expression (1) ci-dessus.

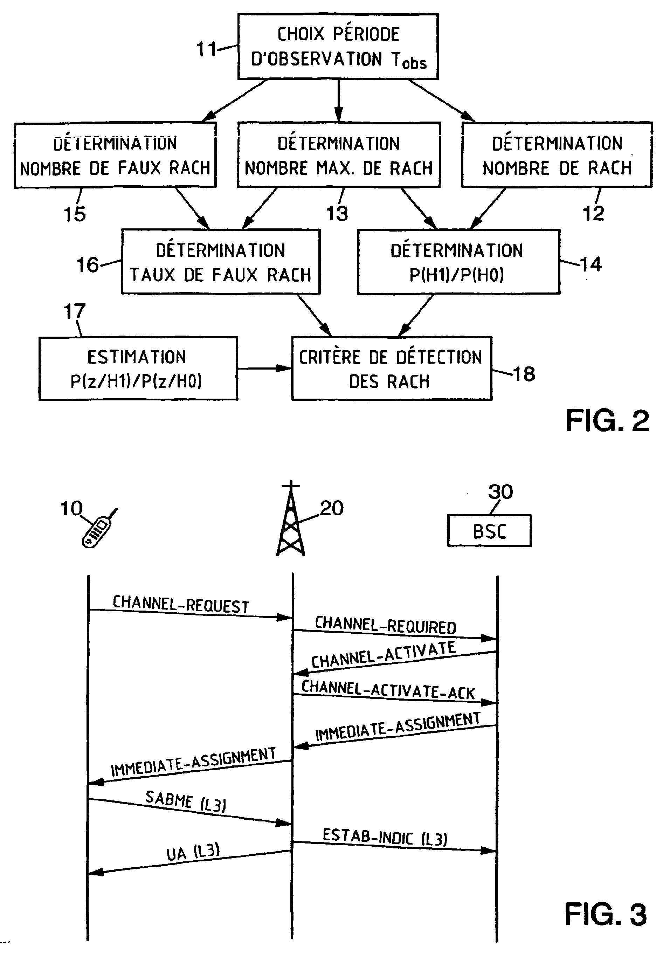

Selon un aspect de l'invention, le rapport P(H1)/P(H0) fait l'objet d'une évaluation, mise à jour au cours du temps. Comme cela est illustré à la figure 2, on commence à l'étape 11 par déterminer une période d'observation $T_{obs}$, pendant laquelle certains indicateurs seront estimés. Cette période doit être suffisamment longue pour obtenir une estimation significative des indicateurs, tout en autorisant une remise à jour suffisamment régulière des estimations. Par exemple, $T_{obs}$ peut être fixé à 30 minutes.

L'évaluation du rapport $\dfrac{P(H1)}{P(H0)} = \dfrac{P(H1)}{1 - P(H1)}$ consiste à déterminer la probabilité d'émission de signaux sur le canal RACH écouté par le système récepteur. Pour cela, on détermine le nombre A de rafales détectées sur le canal RACH dans une période d'observation $T_{obs}$ (« Nombre de RACH » à l'étape 12 de la figure 2) ainsi que le nombre maximum théorique T de rafales pouvant être transmises sur le canal RACH (« Nombre max de RACH » à l'étape 13 de la figure 2) dans la même période.

Le nombre A de rafales détectées sur le canal RACH pendant $T_{obs}$ peut être facilement connu par le système récepteur puisque c'est lui qui décide de la détection ou non de telles rafales. Il lui suffit donc de comptabiliser chaque détection pendant la période d'observation.

Le nombre maximum T de rafales pouvant être transmises sur le canal RACH pendant $T_{obs}$ peut être calculé par le système récepteur en fonction de l'intervalle de temps $T_i$ séparant l'émission de deux rafales et du nombre J de séquences prédéterminées possibles pour le RACH ou utilisées par la station de base considérée (typiquement J = 16). En UMTS, $T_i$ = 5120 chips = 1,33 ms. En GSM, $T_i$ = 148 bits = 0,58 ms. Le nombre T est donné par $T = J \times T_{obs} / T_i$.

D'après ce qui précède, P(H1) peut être estimé sur la période $T_{obs}$ à partir des grandeurs A et T estimées, selon la formule P(H1) = A / T. Le rapport P(H1) / P(H0) peut alors s'écrire P(H1) / P(H0) = A / (T-A).

Ce rapport, mis à jour à l'étape 14 pour chaque période d'observation $T_{obs}$, peut avantageusement être introduit dans le critère de détection (1), afin de fiabiliser la détection des requêtes d'accès au réseau sur un canal RACH, grâce à une prise en compte a posteriori du comportement des utilisateurs sollicitant le canal RACH. En d'autres termes, le seuil c' utilisé est réglé proportionnellement à (T-A) / A.

Un autre aspect de l'invention comporte une estimation du taux de fausses détections de la rafale au cours de la période d'observation $T_{obs}$.

D'après ce qui précède, le système récepteur dispose du nombre maximum possible T de rafales d'accès aléatoire pouvant être transmises sur le canal RACH pendant une période d'observation $T_{obs}$. Il détermine en outre un nombre de détections erronées d'une telle rafale sur le canal RACH, c'est-à-dire un nombre F de signaux détectés et interprétés à tort par le système récepteur comme correspondant à des requêtes d'accès au réseau.

Une demande d'accès au réseau par un terminal 1 fait en effet l'objet d'un échange de signalisation déterminé. Il convient donc de vérifier que cet échange s'est ou non déroulé correctement jusqu'au bout, pour savoir si la demande de ressources détectée au système récepteur était réelle.

A titre d'illustration, la figure 3 montre un tel échange de signalisation dans le cadre du système de radiocommunication GSM. La demande d'accès au réseau par le terminal 10 fait l'objet du message montant « Channel_Request » sur un canal RACH, incorporant la rafale à détecter par la station de base. Sur détection de ce message, la station de base 20 informe le BSC 30 de la requête (message « Channel_Required »). Le BSC 30 réserve alors des ressources de communication qu'il indique à la station de base 20 (message « Channel_Activate »), avant de recevoir un acquittement en réponse (message « Channel_Activate_Ack »). Le BSC 30 envoie alors un message « Immediate_Assignment » au terminal 10 par l'intermédiaire de la station de base 20 pour lui indiquer les ressources de communication qui lui sont affectées. Ensuite, un échange de signalisation de couche 3 est effectué pour confirmer l'ouverture d'une voie de communication entre le terminal 10 et le réseau radio (messages « SABME », « UA » et « Estab_Indic »).

Ainsi, si la station de base 20 ne reçoit pas, par exemple, le message « SABME » de couche 3 après avoir transmis le message d'allocation de ressources « Immediate_Assignment », le système récepteur peut en conclure que la requête d'accès au réseau du terminal 10 a été détectée à tort. En revanche, si l'échange de signalisation confirme que le terminal 10 a bien émis une requête d'accès, le système récepteur ne comptera pas une détection erronée.

Il faut noter qu'un échange de signalisation similaire pourrait permettre de distinguer les requêtes abouties des "fausses" requêtes d'accès au réseau dans d'autres types de systèmes, comme par exemple dans le système UMTS (« Universal Mobile Telecommunication System ») ou tout autre système équivalent.

Le système récepteur, c'est-à-dire la station de base 20 et/ou le BSC 30, comptabilise les « fausses » requêtes pendant $T_{obs}$, et en déduit le nombre F de détections erronées sur le canal RACH (ou « Nombre de faux RACH » sur la figure 2) sur la période d'observation $T_{obs}$ (étape 15 sur la figure 2).

A l'étape 16, il obtient l'estimation du taux de fausses détections sur le canal RACH (ou « taux de faux RACH » sur la figure 2) défini comme le rapport F/T du nombre F de faux RACH par le nombre maximum T possible de RACH sur la période d'observation $T_{obs}$.

Ce dernier rapport donne une indication de la fiabilité de la détection des signaux sur le canal RACH. En effet, si la détection est fiable, la proportion de faux RACH détectés par le système récepteur sera faible en rapport de tous les signaux détectés durant $T_{obs}$, en particulier le bruit. Inversement, si le rapport F/T est élevé, cela signifie que de nombreuses décisions du système récepteur, suite à la détection d'un signal, ont conduit à tort à interpréter du bruit comme étant un signal porté par le RACH.

Le système récepteur utilise le rapport F/T pour ajuster le critère de détection des signaux sur le canal RACH qu'il utilise. En particulier, le niveau seuil de détection c ou c' peut avantageusement être modifié en fonction de ce rapport F/T. Par exemple, si F/T est trop élevé (en comparaison d'un objectif qui peut par exemple être de l'ordre de $10^{-3}$), cela signifie que la détection de la rafale est trop sensible et donc que le seuil de détection doit être durci (augmenté). Inversement, si le rapport F/T est jugé trop faible par le système récepteur, cela signifie que la détection a tendance à manquer des rafales d'accès aléatoire, et qu'il faut plutôt relâcher le critère de détection, c'est-à-dire diminuer le seuil.

C'est ainsi que le réseau asservit le seuil de détection c ou c' afin d'atteindre un objectif en termes de taux de fausses détection F/T.

Le critère ainsi ajusté en fonction du rapport de probabilités P(H1)/P(H0) et/ou du taux de fausses détections F/T est appliqué par la station de base (étape 18 sur la figure 2) aux évaluations de la grandeur de détection (par exemple de la forme P(z/H1) / P(z/H0)) obtenues à l'étape 17.

Dans ce qui précède, on a considéré la station de base 20 et le BSC 30 comme un tout formant un système récepteur. En réalité, certaines fonctions du système récepteur seront mises en oeuvre par la station de base 20 et d'autres par le BSC 30.

En particulier, la détection des rafales est habituellement effectuée par la station de base 20, tandis que certaines des estimations des étapes 12 à 16 peuvent être effectuées par le BSC 30. Dans ce cas, le BSC 30 peut indiquer à la station de base 20 comment adapter le critère de détection qu'elle utilise. Il peut donc par exemple lui indiquer que le seuil de détection c' qu'elle utilise doit être augmenté ou diminué d'une certaine valeur, par exemple d'un nombre de pas d'augmentation ou de diminution qu'il détermine.

Il en est bien sûr de même, lorsque le système de radiocommunication utilisé est l'UMTS. Dans ce cas, le RNC peut envoyer de telles commandes au Node B par l'intermédiaire du protocole d'échange de signalisation NBAP (« Node B Application Part »).

### Revendications

**1.** Procédé de détection d'une rafale de signal transmise à l'initiative d'un émetteur (1) sur un canal radio écouté par un système récepteur (2), la rafale transmise représentant une séquence numérique prédéterminée, dans lequel on estime des paramètres de canal représentant un comportement statistique du canal radio et on évalue une grandeur de détection à partir des paramètres de canal estimés et d'une corrélation entre un signal reçu au système récepteur et la séquence numérique prédéterminée,
**caractérisé en ce qu'**on compare la grandeur de détection à un seuil de détection adaptatif pour décider si la rafale de signal est détectée, et **en ce que** le seuil de détection adaptatif est varié en fonction de l'un au moins parmi les paramètres suivants, estimé sur une période d'observation : un taux de fausses détections de la rafale et un rapport d'une probabilité de transmission de la rafale par une probabilité d'absence de transmission de la rafale.

**2.** Procédé selon la revendication 1, dans lequel l'estimation du taux de fausses détections de la rafale comporte un décompte d'un nombre de procédures de signalisation qui commencent par la détection d'une rafale pendant la période d'observation et qui n'aboutissent pas.

**3.** Procédé selon la revendication 1 ou 2, dans lequel l'estimation du rapport d'une probabilité de transmission de la rafale par une probabilité d'absence de transmission de la rafale comporte un décompte du nombre de détections de la rafale pendant la période d'observation correspondante.

**4.** Procédé selon l'une quelconque des revendications précédentes, dans lequel lesdits paramètres de canal estimés comprennent des moments d'ordre supérieur à 2 du gain sur le canal radio.

**5.** Procédé selon la revendication 4, dans lequel lesdits paramètres de canal estimés comprennent des moments d'ordre 0 à k du gain sur le canal radio, où k est un entier plus grand que 2.

**6.** Procédé selon la revendication 4 ou 5, dans lequel le signal reçu est soumis à un filtrage adapté à la séquence numérique prédéterminée pour obtenir ladite corrélation sous forme d'un signal complexe ayant une première composante sur une voie en phase ($z_x$) et une seconde composante sur une voie en quadrature ($z_y$).

**7.** Procédé selon la revendication 6, dans lequel la grandeur de détection évaluée est proportionnelle à

$$\left( \sum_{n=0}^{k} \frac{1}{n!\left(\sqrt{N_0}\right)^n} . H_n\left(\frac{z_x}{\sqrt{N_0}}\right) . ma_{x,n} \right) . \left( \sum_{n=0}^{k} \frac{1}{n!\left(\sqrt{N_0}\right)^n} . H_n\left(\frac{z_y}{\sqrt{N_0}}\right) . ma_{y,n} \right),$$ où $N_0$ désigne la puissance estimée du bruit sur le canal radio, $z_x$ et $z_y$ désignent lesdites première et seconde composantes, $ma_{x,n}$ et $ma_{y,n}$ désignent les moments d'ordre n du gain respectivement sur la voie en phase et sur la voie en quadrature, $H_n$ désigne le polynôme de Hermite d'ordre n et k est un entier plus grand que 2.

**8.** Procédé selon l'une quelconque des revendications précédentes, dans lequel ledit émetteur (1) est un terminal mobile, ledit système récepteur (2) appartient à un réseau de radiocommunication et dans lequel ladite rafale est émise pour requérir l'accès au réseau.

**9.** Système récepteur apte à détecter une rafale de signal transmise à l'initiative d'un émetteur (1) sur un canal radio écouté par le système récepteur (2), la rafale transmise représentant une séquence numérique prédéterminée, comprenant des moyens d'estimation de paramètres de canal représentant un comportement statistique du canal radio, des moyens d'évaluation d'une grandeur de détection à partir des paramètres de canal estimés et d'une corrélation entre un signal reçu au système récepteur et la séquence numérique prédéterminée, le système récepteur étant **caractérisé par** des moyens de comparaison de la grandeur de détection à un seuil de détection pour décider si la rafale de signal est détectée, et des moyens d'adaptation du seuil de détection à partir de l'un au moins des paramètres suivants, estimé par des moyens d'estimation sur une période d'observation : un taux de fausses détections de la rafale et un rapport d'une probabilité de transmission de la rafale par une probabilité d'absence de transmission de la rafale.

**10.** Système récepteur selon la revendication 9, dans lequel les moyens d'estimation du taux de fausses détections comportent des moyens de décompte d'un nombre de procédures de signalisation qui commencent par la détection d'une rafale pendant la période d'observation et qui n'aboutissent pas.

**11.** Système récepteur selon la revendication 9 ou 10, dans lequel les moyens d'estimation du rapport d'une probabilité de transmission de la rafale par une probabilité d'absence de transmission de la rafale comportent des moyens de décompte du nombre de détections de la rafale pendant la période d'observation.

**12.** Système récepteur selon l'une quelconque des revendications 9 à 11, comprenant au moins une station de base (20) et un contrôleur de station de base (30), dans lequel les moyens d'estimation de paramètres de canal, les moyens d'évaluation de la grandeur de détection et les moyens de comparaison font partie de la station de base, tandis qu'une partie au moins des moyens d'adaptation fait partie du contrôleur de station de base.

**13.** Système récepteur selon la revendication 12, dans lequel le contrôleur de station de base (30) comprend des moyens de transmission à la station de base (20) de messages de réglage du seuil de détection.

**14.** Système récepteur selon l'une quelconque des revendications 9 à 13, dans lequel lesdits paramètres de canal estimés comprennent des moments d'ordre supérieur à 2 du gain sur le canal radio.

**15.** Système récepteur selon la revendication 14, dans lequel lesdits paramètres de canal estimés comprennent des moments d'ordre 0 à k du gain sur le canal radio, où k est un entier plus grand que 2.

**16.** Système récepteur selon la revendication 14 ou 15, comprenant des moyens de filtrage, adapté à la séquence numérique prédéterminée, auquel est soumis le signal reçu pour obtenir ladite corrélation sous forme d'un signal complexe ayant une première composante sur une voie en phase ($z_x$) et une seconde composante sur une voie en quadrature ($z_y$).

**17.** Système récepteur selon la revendication 16, dans lequel la grandeur de détection évaluée est proportionnelle à

$$\left( \sum_{n=0}^{k} \frac{1}{n! \left(\sqrt{N_0}\right)^n} . H_n\left( \frac{z_x}{\sqrt{N_0}} \right) ma_{x,n} \right) . \left( \sum_{n=0}^{k} \frac{1}{n! \left(\sqrt{N_0}\right)^n} . H_n\left( \frac{z_y}{\sqrt{N_0}} \right) ma_{y,n} \right),$$ où $N_0$ désigne la

puissance estimée du bruit sur le canal radio, $z_x$ et $z_y$ désignent lesdites première et seconde composantes, $ma_{x,n}$ et $ma_{y,n}$ désignent les moments d'ordre n du gain respectivement sur la voie en phase et sur la voie en quadrature, $H_n$ désigne le polynôme de Hermite d'ordre n et k est un entier plus grand que 2.

**18.** Système récepteur selon l'une quelconque des revendications 9 à 17, dans lequel le système récepteur appartient à un réseau de radiocommunication et dans lequel ladite rafale est émise pour requérir l'accès au réseau.

**Claims**

1. Method for detecting a signal burst transmitted on the initiative of a sender (1) on a radio channel listened to by a receiver system (2), the transmitted burst representing a predetermined digital sequence, in which method channel parameters representing a statistical behaviour of the radio channel are estimated and a detection magnitude is evaluated from the estimated channel parameters and a correlation between a signal received at the receiver system and the predetermined digital sequence,
   **characterized in that** the detection magnitude is compared with an adaptive detection threshold to decide whether the signal burst is detected, and **in that** the adaptive detection threshold is varied as a function of at least one among the following parameters, estimated over an observation period : a false detection rate for the burst and a ratio of a probability of transmission of the burst to a probability of absence of transmission of the burst.

2. Method according to Claim 1, in which the estimation of the false detection rate for the burst comprises a countdown of a number of signalling procedures which begin with the detection of a burst during the observation period and which do not complete.

3. Method according to Claim 1 or 2, in which the estimation of the ratio of a probability of transmission of the burst to a probability of absence of transmission of the burst comprises a countdown of the number of detections of the burst during the corresponding observation period.

4. Method according to any one of the preceding claims, in which said estimated channel parameters comprise moments of order greater than 2 of the gain on the radio channel.

5. Method according to Claim 4, in which said estimated channel parameters comprise moments of order 0 to k of the gain on the radio channel, where k is an integer larger than 2.

6. Method according to Claim 4 or 5, in which the signal received is subjected to a filtering matched to the predetermined digital sequence so as to obtain said correlation in the form of a complex signal having a first component on an in-phase path ($z_x$) and a second component on a quadrature path ($z_y$).

7. Method according to Claim 6, in which the evaluated detection magnitude is proportional to

$$\left( \sum_{n=0}^{k} \frac{1}{n!\left(\sqrt{N_0}\right)^n} . H_n\left(\frac{z_x}{\sqrt{N_0}}\right) . ma_{x,n} \right) . \left( \sum_{n=0}^{k} \frac{1}{n!\left(\sqrt{N_0}\right)^n} . H_n\left(\frac{z_y}{\sqrt{N_0}}\right) . ma_{y,n} \right),$$ where $N_0$ denotes the estimated

power of the noise on the radio channel, $z_x$ and $z_y$ denote said first and second components, $ma_{x,n}$ and $ma_{y,n}$ denote the moments of order n of the gain on the in-phase path and on the quadrature path respectively, $H_n$ denotes the Hermite polynomial of order n and k is an integer larger than 2.

8. Method according to any one of the preceding claims, in which said sender (1) is a mobile terminal, said receiver system (2) belongs to a radiocommunication network and in which said burst is sent so as to request access to the network.

9. Receiver system able to detect a signal burst transmitted on the initiative of a sender (1) on a radio channel listened to by the receiver system (2), the transmitted burst representing a predetermined digital sequence, comprising means of estimating channel parameters representing a statistical behaviour of the radio channel, means of evaluating a detection magnitude from the estimated channel parameters and a correlation between a signal received at the receiver system and the predetermined digital sequence, the receiver system being **characterized by** means of comparing the detection magnitude with a detection threshold to decide whether the signal burst is detected, and means for adapting the detection threshold from at least one among the following parameters, estimated by estimation means over an observation period : a false detection rate for the burst and a ratio of a probability of transmission of the burst to a probability of absence of transmission of the burst.

10. Receiver system according to Claim 9, in which the estimation means for estimating the false detection rate comprise countdown means for metering a number of signalling procedures which begin with the detection of a burst during the observation period and which do not complete.

**11.** Receiver system according to Claim 9 or 10, in which the estimation means for estimating the ratio of a probability of transmission of the burst to a probability of absence of transmission of the burst comprise countdown means for metering the number of detections of the burst during the observation period.

**12.** Receiver system according to any one of Claims 9 to 11, comprising at least one base station (20) and a base station controller (30), in which the estimation means for estimating channel parameters, the means for evaluating the detection magnitude and the means of comparison form part of the base station, while a part at least of the adaptation means forms part of the base station controller.

**13.** Receiver system according to Claim 12, in which the base station controller (30) comprises means for transmitting messages for adjusting the detection threshold to the base station (20).

**14.** Receiver system according to any one of Claims 9 to 13, in which said estimated channel parameters comprise moments of order greater than 2 of the gain on the radio channel.

**15.** Receiver system according to Claim 14, in which said estimated channel parameters comprise moments of order 0 to k of the gain on the radio channel, where k is an integer larger than 2.

**16.** Receiver system according to Claim 14 or 15, comprising means of filtering, matched to the predetermined digital sequence, to which the signal received is subjected to obtain said correlation in the form of a complex signal having a first component on an in-phase path ($z_x$) and a second component on a quadrature path ($z_y$).

**17.** Receiver system according to Claim 16, in which the evaluated detection magnitude is proportional to

$$\left( \sum_{n=0}^{k} \frac{1}{n!\left(\sqrt{N_0}\right)^n} . H_n\left(\frac{z_x}{\sqrt{N_0}}\right).ma_{x,n} \right)\left( \sum_{n=0}^{k} \frac{1}{n!\left(\sqrt{N_0}\right)^n} . H_n\left(\frac{z_y}{\sqrt{N_0}}\right).ma_{y,n} \right),$$ where $N_0$ denotes the estimated

power of the noise on the radio channel, $z_x$ and $z_y$ denote said first and second components, $ma_{x,n}$ and $ma_{y,n}$ denote the moments of order n of the gain on the in-phase path and on the quadrature path respectively, $H_n$ denotes the Hermite polynomial of order n and k is an integer larger than 2.

**18.** Receiver system according to any one of Claims 9 to 17, in which said receiver system (2) belongs to a radiocommunication network and in which said burst is sent so as to request access to the network.

**Patentansprüche**

**1.** Verfahren zum Erfassen eines Signal-Bursts, der auf Betreiben eines Senders (1) auf einem Funkkanal übertragen wird, der von einem Empfangssystem (2) abgehört wird, wobei der übertragene Burst eine vorausbestimmte nummerische Sequenz darstellt, in dem man Kanalparameter schätzt, die ein statistisches Verhalten des Funkkanals darstellen, und man eine Erfassungsgröße ausgehend von den geschätzten Kanalparametern und einer Korrelation zwischen einem am Systemempfänger empfangenen Signal und der vorausbestimmten nummerischen Sequenz bewertet,
**dadurch gekennzeichnet, dass** man die Erfassungsgröße mit einem anpassbaren Erfassungsschwellenwert vergleicht, um zu entscheiden, ob der Signal-Burst erfasst wird, und dass der anpassbare Erfassungsschwellenwert in Abhängigkeit von mindestens einem der folgenden Parameter, der über eine Erfassungsperiode geschätzt wird, variiert wird: eine Rate falscher Erfassungen des Bursts und ein Verhältnis einer Übertragungswahrscheinlichkeit des Bursts durch eine Übertragungsabwesenheitswahrscheinlichkeit des Bursts.

**2.** Verfahren nach Anspruch 1, bei dem das Schätzen der Rate der falschen Erfassungen des Bursts eine Abzählung einer Anzahl von Meldevorgehensweisen aufweist, die mit dem Erfassen eines Bursts während der Beobachtungsperiode beginnen und nicht erfolgreich sind.

**3.** Verfahren nach Anspruch 1 oder 2, bei dem das Schätzen des Verhältnisses einer Übertragungswahrscheinlichkeit des Bursts durch eine Übertragungsabwesenheitswahrscheinlichkeit des Bursts ein Abzählen der Anzahl der Erfassungen des Bursts während der entsprechenden Beobachtungsperiode aufweist.

4. Verfahren nach einem der vorhergehenden Ansprüche, bei dem die geschätzten Kanalparameter Momente mit einer Größenordnung größer als 2 der Verstärkung auf dem Funkkanal umfassen.

5. Verfahren nach Anspruch 4, bei dem die geschätzten Kanalparameter Momente mit einer Größenordnung 0 bis k der Verstärkung auf dem Funkkanal umfassen, wobei k eine Ganzzahl größer als 2 ist.

6. Verfahren nach Anspruch 4 oder 5, bei dem das empfangene Signal einem an die vorausbestimmte nummerische Sequenz angepassten Filtern unterzogen wird, um die Korrelation in Form eines komplexen Signals zu erzielen, das eine erste Komponente auf einem Kanal in Phase ($z_X$) und eine zweite Komponente auf einem Kanal in Quadratur ($z_Y$) hat.

7. Verfahren nach Anspruch 6, bei dem die bewertete Erfassungsgröße proportional ist zu

$$\left(\sum_{n=0}^{k} \frac{1}{n!\left(\sqrt{N_0}\right)^n} \cdot H_n\left(\frac{z_X}{\sqrt{N_0}}\right) ma_{x,n}\right)\left(\sum_{n=0}^{k} \frac{1}{n!\left(\sqrt{N_0}\right)^n} \cdot H_n\left(\frac{z_y}{\sqrt{N_0}}\right) ma_{y,n}\right), \text{ oder } N_0$$

wobei $N_0$ die geschätzte Leistung des Rauschens auf dem Funkkanal bezeichnet, $z_X$ und $z_Y$ die erste und die zweite Komponente bezeichnen, $ma_{x,n}$ und $ma_{y,n}$ die Momente mit der Größenordnung n der Verstärkung jeweils auf dem Kanal in Phase und auf dem Kanal in Quadratur bezeichnen, $H_n$ das Hermite-Polynom der Größenordnung n bezeichnet und k eine Ganzzahl größer als 2 ist.

8. Verfahren nach einem der vorhergehenden Ansprüche, bei dem der Sender (1) ein mobiles Terminal ist, wobei das Empfangssystem (2) zu einem Funkkommunikationsnetz gehört, und bei dem der Burst gesendet wird, um den Zugang zum Netz zu fordern.

9. Empfangssystem, das einen Signal-Burst erfassen kann, der auf Betreiben eines Senders (1) auf einem Funkkanal übertragen wird, der von dem Empfangssystem (2) abgehört wird, wobei der übertragene Burst eine vorausbestimmte nummerische Sequenz darstellt, das Mittel zum Schätzen von Kanalparametern aufweist, die ein statistisches Verhalten des Funkanals darstellen, Mittel zum Bewerten einer Erfassungsgröße ausgehend von den geschätzten Kanalparametern und einer Korrelation zwischen einem am Empfangssystem empfangenen Signal und der vorausbestimmten nummerischen Sequenz, Empfangssystem **gekennzeichnet durch** Mittel zum Vergleichen der Erfassungsgröße mit einem Erfassungsschwellenwert, um zu entscheiden, ob der Signal-Burst erfasst ist, und Mittel zum Anpassen des Erfassungsschwellenwerts ausgehend von mindestens einem der folgenden Parameter, der **durch** Schätzungsmittel über eine Beobachtungsperiode geschätzt wird: eine Rate falscher Erfassungen des Bursts und ein Verhältnis einer Übertragungswahrscheinlichkeit des Bursts **durch** eine Übertragungsabwesenheitswahrscheinlichkeit des Bursts.

10. Empfangssystem nach Anspruch 9, bei dem die Mittel zum Schätzen der Rate falscher Erfassungen Mittel zum Abzählen einer Anzahl von Meldevorgehensweise aufweisen, die mit dem Erfassen eines Bursts während der Beobachtungsperiode beginnen und nicht erfolgreich sind.

11. Empfangssystem nach Anspruch 9 oder 10, bei dem die Mittel um Schätzen des Verhältnisses einer Übertragungswahrscheinlichkeit des Bursts durch eine Übertragungsabwesenheitswahrscheinlichkeit des Bursts Mittel zum Abzählen der Anzahl von Erfassungen des Bursts während der Beobachtungsperiode aufweisen.

12. Empfangssystem nach einem der Ansprüche 9 bis 11, das mindestens eine Basisstation (20) und einen Basisstationcontroller (30) aufweist, in dem die Mittel zum Schätzen von Kanalparametern, die Mittel zum Bewerten der Erfassungsgröße und die Vergleichsmittel zur Basisstation gehören, während mindestens ein Teil der Anpassungsmittel zum Basisstationcontroller gehört.

13. Empfangssystem nach Anspruch 12, bei dem der Basisstationcontroller (30) Mittel zum Übertragen von Einstellmeldungen des Erfassungsschwellenwerts zu der Basisstation (20) umfasst.

14. Empfangssystem nach einem der Ansprüche 9 bis 13, bei dem die geschätzten Kanalparameter Momente einer Größenordnung größer als 2 der Verstärkung auf dem Funkkanal enthalten.

15. Empfangssystem nach Anspruch 14, bei dem die geschätzten Kanalparameter Momente der Größenordnung 0 bis k der Verstärkung auf dem Funkkanal umfassen, wobei k eine Ganzzahl größer als 2 ist.

16. Empfangssystem nach Anspruch 14 oder 15, das Mittel zu einem Filtern aufweist, das an die vorausbestimmte nummerische Sequenz angepasst ist, welchem das empfangene Signal unterzogen wird, um die Korrelation in Form eines komplexen Signals zu erzielen, das eine erste Komponente auf einem Kanal in Phasen ($z_x$) und eine zweite Komponente auf einem Kanal in Quadratur ($z_Y$) hat.

17. Empfangssystem nach Anspruch 16, bei dem die bewertete Erfassungsgröße proportional ist zu

$$\left( \sum_{n=0}^{k} \frac{1}{n! \left(\sqrt{N_0}\right)^n} \cdot H_n\left(\frac{z_x}{\sqrt{N_0}}\right) ma_{x,n} \right)\left( \sum_{n=0}^{k} \frac{1}{n! \left(\sqrt{N_0}\right)^n} \cdot H_n\left(\frac{z_y}{\sqrt{N_0}}\right) ma_{y,n} \right), \text{ oder } N_0$$

wobei $N_0$ die geschätzte Leistung des Rauschens auf dem Funkkanal bezeichnet, $z_X$ und $z_Y$ die erste und die zweite Komponente bezeichnen, $ma_{x,n}$ und $ma_{y,n}$ die Momente der Größenordnung n der Verstärkung jeweils auf dem Kanal in Phase und auf dem Kanal in Quadratur bezeichnen, $H_n$ das Hermite-Polynom der Größenordnung n bezeichnet und k eine Ganzzahl größer als 2 ist.

18. Empfangssystem nach einem der Ansprüche 9 bis 17, bei dem das Empfangssystem zu einem Funknetz gehört, und bei dem der Burst abgegeben wird, um den Zugang zum Netz anzufordern.

**FIG. 1**

EP 1 427 157 B1

11 — CHOIX PÉRIODE
D'OBSERVATION $T_{obs}$

DÉTERMINATION
NOMBRE DE FAUX RACH

15

DÉTERMINATION
NOMBRE MAX. DE RACH

13

DÉTERMINATION
NOMBRE DE RACH

12

16 — DÉTERMINATION
TAUX DE FAUX RACH

DÉTERMINATION
$P(H1)/P(H0)$

14

17

ESTIMATION
$P(z/H1)/P(z/H0)$

CRITÈRE DE DÉTECTION
DES RACH

18

FIG. 2

10

20

30

BSC

CHANNEL-REQUEST

CHANNEL-REQUIRED

CHANNEL-ACTIVATE

CHANNEL-ACTIVATE-ACK

IMMEDIATE-ASSIGNMENT

IMMEDIATE-ASSIGNMENT

SABME (L3)

ESTAB-INDIC (L3)

UA (L3)

FIG. 3